# EUROPEAN PATENT SPECIFICATION

(11) **EP 2 619 569 B1**
(45) Date of publication and mention of the grant of the patent: **23.05.2018**
(21) Application number: 11827057.8
(22) Date of filing: 21.09.2011
(51) Int. Cl.: B01D 15/10, G01N 30/52, G01N 30/56

(54) **WETTING OF A PLASTIC BED SUPPORT FOR A CHROMATOGRAPHY COLUMN**
BENETZUNG EINES KUNSTSTOFFBETTTRÄGERS FÜR EINE CHROMATOGRAPHIESÄULE
MOUILLAGE DE SUPPORT DE LIT EN PLASTIQUE POUR COLONNE DE CHROMATOGRAPHIE

(30) Priority: 24.09.2010 SE 1050993
(43) Date of publication of application: 31.07.2013
(73) Proprietor: GE Healthcare Bio-Sciences AB, 75184 Uppsala (SE)
(72) Inventor: ANDERSTEDT, Lena, S-751 84 Uppsala (SE); AVALLIN, Johan, F., S-751 84 Uppsala (SE); KARLSSON, Jonas, S-751 84 Uppsala (SE)
(74) Representative: Aldenbäck, Ulla Christina
(86) International application number: PCT/SE2011/051132
(87) International publication number: WO 2012/039670

(56) References cited:
- WO-A1-2010/009311
- US-A1- 2005 133 424
- Rohm ET AL: "AMBERCHROM(TM) Chromatographic Resins: Instruction manual for packing and use", , 1 April 2003 (2003-04-01), XP055172220, Retrieved from the Internet: URL:http://www.advancedbiosciences.com/Bio processing_doc/us_english/packing.pdf [retrieved on 2015-02-26]
- Ge Healthcare: "BPG Columns: Instructions for use", , 1 January 2005 (2005-01-01), XP055172224, Retrieved from the Internet: URL:https://www.gelifesciences.com/gehcls_ images/GELS/Related Content/Files/1314729545976/litdoc18117070 AB US_20110830214609.pdf [retrieved on 2015-02-26]
- I. Bemberis ET AL: "BioPharm International Guide: Column Packing for Process-Scale Chromatography: Guidelines for Reproducibility", , 1 July 2003 (2003-07-01), pages 23-30, XP055172217, Retrieved from the Internet: URL:http://images.alfresco.advanstar.com/a lfresco_images/pharma/2014/08/22/8d9dbce3- f181-499a-ac0a-5addebcd6ab9/article-80028. pdf [retrieved on 2015-02-26]
- 'Essential Life Solutions' UPSCALE COLUMN MANUAL 16 July 2006, pages 12, 14 - 15, XP008169594 Retrieved from the Internet: <URL:http://www.essential-life.net/PDF_File s/Upscale_Column_Manual_R2_0.pdf> [retrieved on 2011-03-24]

## Description

### Technical field

The present invention relates generally to separation and specifically to process chromatography. More particularly it relates to wetting of bed supports for chromatography columns.

### Background of the invention

Chromatography columns may be used in industrial processes to purify process liquids and separate substances of interest from process liquids. One important application is in bioprocessing, where proteins and other biopharmaceuticals are purified from complex biological feedstocks. Typical chromatography columns comprise a column wall in the form of hollow column tube which is connected to a removable upper end plate assembly and a removable lower end plate assembly. One end plate assembly is provided with a process fluid inlet arrangement, typically comprising an inlet pipe and an inlet valve and the other end plate assembly is provided with a process fluid outlet arrangement, typically comprising an outlet pipe and an outlet valve. Each end of the column tube is usually provided with a removable distributor plate in the interior of the column. These inlet and outlet distributor plates may be attached to the respective end plate assembly or the upper distributor plate may be arranged to be movable towards or away from the end plate assembly. During use, the space in the column between the distributor plates is usually filled with a chromatography medium. A porous bed support is normally provided between each distribution system and the media in order to prevent media particles from escaping the column. The inlet distributor plate is intended to distribute incoming fluid evenly over the surface of the media at the inlet end of the column while the outlet distributor plate is intended to collect fluid evenly from the surface of the media at the outlet end of the column. Such a column may weigh several tons.

The porous bed supports extend across substantially the whole internal diameter of the column and are normally fixed along the outer perimeter of the column and at the center of the column. The supports can be prepared from woven threads of either metals or polymers or they can be made from sintered particles. They can also be multilayer constructions of e.g. several woven meshes joined by sintering. In the processing of biomolecules it is common to use corrosive liquids, such as solutions with high concentrations of chlorides, acidic buffers, hypochlorite etc and in these cases it is often preferred to use plastic bed supports to eliminate corrosion of stainless steels etc. A commonly used type of plastic bed support comprises porous frits prepared from sintered polymer particles. These frits are available in several materials, such as polyethylene, polypropylene etc from companies like Porvair PLC (UK) and Porex Corp (US).

These materials are hydrophobic and when they are to be used in the column after dry storage, they must be thoroughly wetted to displace the air from the pore structure. One way to do this is to immerse the bed support in a liquid having low surface tension, such as a water-miscible solvent or an aqueous surfactant solution and, once the air has been replaced, wash with water or an aqueous solution to be used in the operation of the column. I Bemberis et al (BioPharm International Guide pp 23-30, July 2003) recommend immersion of bed supports in >80% ethanol, isopropanol or methanol. "Essential life solutions" UPSCALE COLUMN MANUAL 16 July 2006, p. 12,14-15 discloses wetting a polyethylene frit in a column in 20% ethanol solution.

A drawback of the solvent method is that solvents are flammable and may only be handled in explosion classified locations where all electrical equipment is explosion proof. Since solvents are not normally handled in most bioprocessing facilities this involves substantial extra costs. Solvents may also attack materials in bioprocessing columns designed primarily for use with aqueous systems. An issue with surfactants is that they cause foaming and that they adsorb strongly to the pore surfaces, causing potential slow desorption and resulting leakage of surfactant traces into the biopharmaceutical product. Surfactants are non-desirable contaminants in parenteral pharmaceuticals, as they are irritants and disrupt cell membranes.

Hence, there is a need for a wetting method which involves neither flammable liquids nor surfactants.

### Brief description of the invention

One aspect of the present invention is to provide efficient chromatography in a column equipped with a plastic bed support, where the bed support is free from air. This is achieved with a wetting method as defined in claim 1 and with a chromatography method as defined in claim 10.

One advantage with such a method is that no surfactants or flammable solutions have to be used.

One or more of the aspects above may be achieved by the present invention as defined by the appended claims. Additional aspects, details and advantages of the invention will appear from the detailed description and claims that follow.

### Brief description of the drawings

Figure 1 shows a chromatography column with bed supports.
Figure 2 shows a method for wetting a plastic bed support according to the invention.
Figure 3 shows a method for wetting a plastic bed support according to the invention.
Figure 4 shows a method for performing chromatography according to the invention

### Definitions

The term "non-surfactant wetting agent" means herein a wetting agent for the plastic bed support, which is not a surfactant. A surfactant (as defined e.g. in Kirk-Othmer Encyclopedia of Chemical Technology vol. 24, http://onlinelibrary.wiley.com/doi/10.1002/0471238961.1921180612251414.a01.pub2/abstract) is a species comprising a C8-C18 hydrocarbon or fluorocarbon chain and a hydrophilic group (polar or ionic). Hence, a surfactant has a molecular weight above 130 D. A wetting agent is an additive that increases the spreading and penetrating power of an aqueous liquid on a solid substrate. Examples of non-surfactant wetting agents are water soluble solvents and alkali metal hydroxides.

The term "flash point" means herein the lowest temperature at which a volatile liquid can vaporize to form an ignitable mixture in air. The flash point can be measured e.g. by the ASTM D3828 or ASTM D93 closed-cup methods and is an indication of the flammability of the liquid. The term "water soluble" herein means that a substance is soluble in water at room temperature, i.e. about 25°C, to a concentration of at least 2 wt. %.

The term "water miscible" herein means that a substance is soluble in water at room temperature, i.e. about 25°C, over the entire 0-100 % concentration range.

### Detailed description of the invention

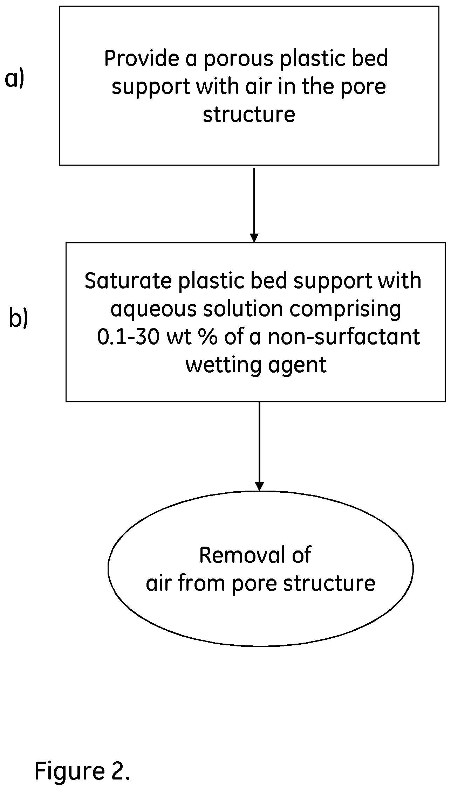

One aspect of the present invention, illustrated by Figure 2, relates to providing efficient air removal from a plastic bed support without using surfactants or flammable solutions. This is achieved with a method where a porous plastic bed support having air in the pore structure is provided, the plastic bed support is soaked in an aqueous solution comprising 12-21wt % of n-propanol as a non-surfactant wetting agent, resulting in the removal of at least about 60% of the air from the pore structure. The method can also result in the removal of at least about 80%, such as at least about 90% of the air or substantially all air from the pore structure. It is to be understood that the air in the pore structure may comprise any gaseous materials e.g. originating from the manufacture or storage of the porous plastic bed support. The removal of the air can be checked e.g. by weighing the soaked bed support - complete air removal is indicated by a weight increase corresponding to the entire pore volume being filled. The pore volume is usually provided by the material supplier, but can also be measured either by porosimetric or densitometric methods known in the art. An alternative method to monitor the air removal can be by measuring the chromatographic performance of a column comprising the treated bed support - removal of substantially all air is here indicated by reaching the theoretically accessible plate number for the given packing material and column construction, as well as by a stable plate number when performing repeated packings of media in the column.

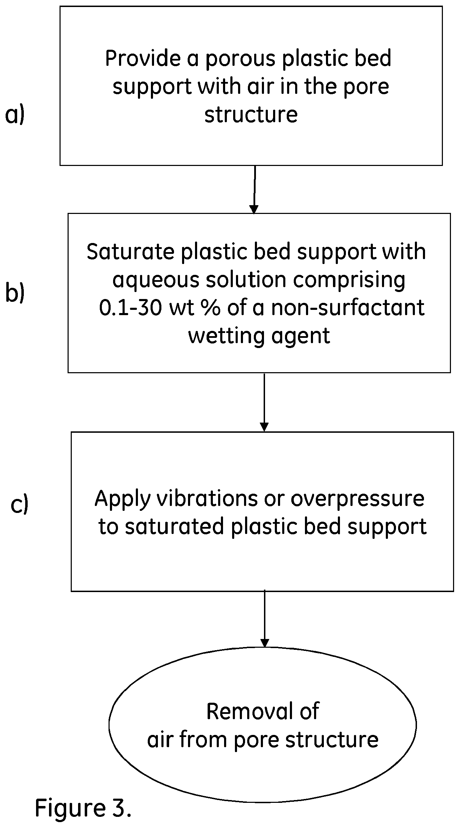

In certain embodiments, illustrated by Figure 3, the method also comprises a step of applying at least 10 kPa, such as at least 50 kPa or at least 100 kPa, overpressure to said plastic bed support when soaked in said aqueous solution and/or vibrating said plastic bed support when soaked in said aqueous solution. The vibration may be continuous or intermittent and may comprise vibrations of constant or varying frequencies. The application of overpressure can be done to a separate soaking vessel or to a chromatography column comprising the soaked plastic bed support. The overpressure can be applied as one or more pulses of with a release of pressure after each pulse. The pulse length can be up to several hours, such as at least one hour. The treatment may also comprise one or more pulses of reduced pressure, e.g. vacuum.

In certain embodiments the method further comprises a step of mounting the plastic bed support in a chromatography column. This step can be carried out after the soaking of the bed support in the non-surfactant wetting agent solution and the vibration or pressurizing. In this case the bed support can be soaked and vibrated or pressurized in a separate soaking vessel or trough and afterwards mounted in the column. This method is particularly advantageous for smaller bed supports, e.g. of up to 300 mm diameter. Alternatively, the mounting step can also be carried out before the soaking and vibration or pressurizing, in which case the soaking and vibration or pressurizing will take place in the column. The soaking can in this case conveniently be done by partially or completely filling the column with an aqueous solution comprising a non-surfactant wetting agent. Such a method is particularly advantageous for larger bed supports, e.g. of at least 300 mm diameter.

In some embodiments the method also comprises a step of washing the plastic bed support to remove the non-surfactant wetting agent. The washing can be done when the bed support is mounted in the column, e.g. by passing a washing fluid through the column, or alternatively by replacing the wetting agent solution in the soaking vessel or trough with washing fluid. The washing fluid can be an aqueous fluid, such as water or a buffer or salt solution.

In one embodiment the step of vibrating the soaked bed support comprises applying ultrasound to the plastic bed support. The ultrasound can comprise vibrations in the 20-400 kHz frequency range and can be applied e.g. by immersing an ultrasound transducer in the non-surfactant wetting agent solution, by contacting an ultrasound transducer with the walls of the soaking vessel/trough/column or by using an ultrasound bath as the soaking vessel or trough. Ultrasound transducers and baths are well known in the art and are available from many suppliers. An advantage of applying ultrasound is that the penetration of the non-surfactant wetting agent solution into the pore structure of the plastic bed support is improved and the air is dispersed as small bubbles that can easily be removed from the bed support. In a specific embodiment, the frequency and/or the amplitude of the ultrasound is tuned to provide optimal air removal from a particular combination of bed support and soaking vessel/trough.

In certain embodiments the step of vibrating the soaked bed support can also comprise applying vibrations of non-ultrasound frequencies (i.e. outside the 20-400 kHz range) to the plastic bed support. The vibration frequency can be below 20 kHz, such as e.g. in the 25-500 Hz interval where commercial equipment for vibration of e.g. concrete is readily available. Both internal "poker" vibrators and external vibrators mounted on the vessel/trough/column can be used.

In certain embodiments the non-surfactant wetting agent has a molecular weight of less than 130 D, such as less than 110 D or even less than 70 D. It can also have a molecular weight between 50 and 130 D, such as between 50 and 110 D. An advantage of having a low molecular weight is that it is easier to wash out the wetting agent, while it can be advantageous to avoid the lowest molecular weights in order to reduce volatility and flammability.

Examples of water soluble C3-C6 alcohols are n-propanol, isopropanol, n-butanol, isobutanol, 2-butanol, tert-butanol, pentanols, hexanols and benzyl alcohol, of which n-propanol, n-butanol, n-pentanol, n-hexanol and benzyl alcohol are primary alcohols. N-propanol and isopropanol are completely water-miscible at room temperature. Examples of water soluble (and completely water-miscible) C3-C6 glycols include 1,2-propanediol, 1,2-butanediol, 1,2-pentanediol, 1,2-hexanediol, 1,3-propanediol, 1,4-butanediol, diethylene glycol etc. Examples of water soluble (and completely water-miscible) C3-C6 glycol ethers include ethylene glycol methyl ether, ethylene glycol ethyl ether, ethylene glycol propyl ether, ethylene glycol butyl ether, diethylene glycol methyl ether, diethylene glycol ethyl ether, propylene glycol methyl ether, propylene glycol ethyl ether etc. An advantage of using water soluble C3-C6 alcohols, glycols or glycol ethers is that they are better wetting agents than e.g. ethanol and can hence be used in lower concentrations. At equal concentration their aqueous solutions also have higher flame points than ethanol solutions. In one embodiment the aqueous non-surfactant wetting agent solution comprises 2-30 wt %, such as 10-25 %, 12-21 % or 12-17 % of one or more C3-C6 alcohols, glycols or glycol ethers. One advantage of not exceeding 30 % concentration of the alcohols, glycols or glycol ethers is that the flash point of the solution can be kept above the operating temperature. Another advantage is that at these concentrations the solution is less likely to attack sensitive materials in some bioprocess columns, e.g. acrylic column tubes and rubber gaskets. The solution can be homogeneous, i.e. the concentration of the aqueous non-surfactant wetting agent does not exceed its room temperature water solubility. The room temperature water solubility of the aqueous non-surfactant wetting agent can be at least 4 wt %, such as at least 12 wt % or it can be completely water-miscible.

Mixtures of different non-surfactant wetting agents are also considered. They can be mixtures of different alcohols, glycols and glycol ethers, as well as mixtures of one or more of these substances with one or more alkali metal hydroxides. In this case, the total concentration of non-surfactant wetting agents can be 0.1-30 wt %, such as 0.1-20 wt %, 0.1-17 wt % or 12-17 wt %.

In certain embodiments said aqueous solution in step b. has either no flash point or a (closed-cup) flash point of at least about 30 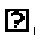 C, such as higher than about 35 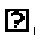 C or about 40 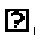 C. This has the advantage that the aqueous solution is not considered flammable under the conditions of use and that consequently it is not necessary to use costly explosion proof equipment and localities. Alkali metal hydroxides are non-combustible and hence their aqueous solutions do not have a flash point. Flash points for aqueous solutions of ethanol, n-propanol and isopropanol are given in Table 1.
Table 1. Closed-cup flash points ( 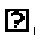 C) for aqueous alcohol solutions of different concentrations.

| Conc. wt. % | Ethanol | n-propanol | Isopropanol |
|---|---|---|---|
| 12 | 39-40 | 36-37 | 32-33 |
| 17 | 35 | 34 | 29 |
| 21 | 31-32 | 33 | 26-27 |
| 26 | 29 | 28 | 20 |

Isopropanol and particularly n-propanol are more efficient wetting agents than ethanol and can hence be used in lower concentrations, resulting in higher flash points. Due to their higher molecular weights and corresponding lower volatilities, water soluble C4-C6 alcohols, glycols and glycol ethers can generally be expected to have higher flash points in aqueous solution than the C2-C3 alcohols listed in the table.

The_aqueous non-surfactant wetting agent solution comprises 12-21 wt %, such as 12-17 wt %, n-propanol.

In certain embodiments the plastic bed support has a diameter of at least 5 cm, such as at least 10 cm or at least 30 cm. Proper removal of air is particularly important for large-diameter process columns and flammability is also a more important issue for large diameter bed supports due to the larger exposed surface and the difficulty of working in ventilated fume hoods etc.

In certain embodiments the plastic bed support comprises a sintered porous plastic. Sintered porous plastics as obtainable from e.g. Porvair PLC (UK) and Porex Corp (US) have suitable pore structures and good mechanical properties for use as chromatography bed supports. The plastic support comprises a polyolefin, such as polyethylene (high or low density), polyopropylene or ethylene/propylene copolymers. It can also comprise other plastics such as polytetrafluoroethylene or polyethetherketone. Alternatively the plastic bed support can comprise a woven or non-woven fibrous structure, optionally in a multilayer construction. The fibers can be prepared e.g. from polyolefins like polyethylene or polypropylene.

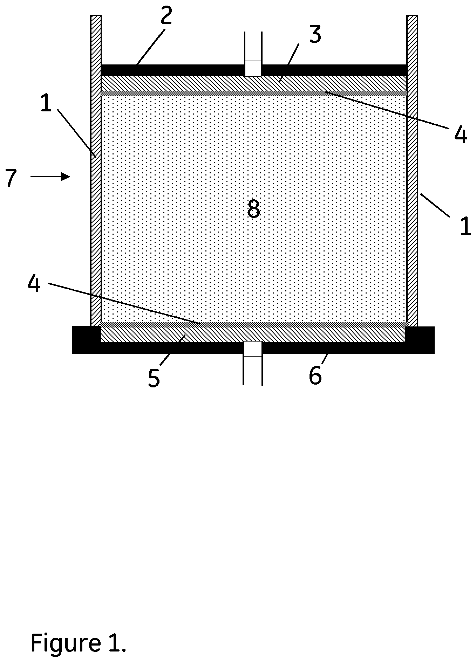

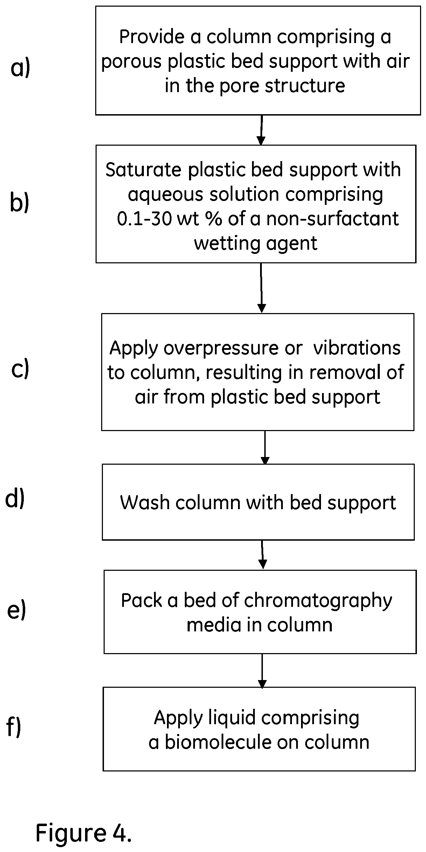

A further aspect of the invention illustrated by Figs 1 and 4 relates to performing a chromatographic separation of a biomolecule on a column **7** equipped with at least one plastic bed support **4** from which air has been removed without using surfactants or flammable solutions. This is achieved by a method where a. a column **7** comprising a porous plastic bed support **4** having air in the pore structure is provided, b. the plastic bed support **4** is soaked in an aqueous solution comprising 0.1-30 wt %, such as 0.1-20 wt %, 0.1-17 wt % or 12-17 wt %, of a non-surfactant wetting agent, c. vibrations or at least 10 kPa, such as at least 50 kPa or at least 100 kPa, overpressure are applied to said column when the plastic bed support is soaked in said aqueous solution, resulting in the removal of at least about 60% of the air from said pore structure, d. the plastic bed support is washed, e. a bed **8** of chromatography media is packed in the column and f. a liquid comprising a biomolecule is applied on the column. The column can comprise a column tube **1,** an upper end plate **2,** an upper distributor plate **3,** a lower distributor **5** and a lower end plate **6.** The biomolecule can be a nucleic acid, a vaccine or a protein, e.g. an immunoglobulin such as a monoclonal antibody. The liquid can be e.g. a clarified cell culture, blood plasma or an eluate or flow-through from a previous chromatography column.

In certain embodiments at least about 80%, such as at least about 90% or substantially all air is removed from the pore structure.

In one embodiment the aqueous solution in step b has either no flash point or a flash point of at least 30 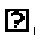 C, such as higher than 35 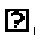 C.

The aqueous solution in step b comprises 12-21 wt % n-propanol (e.g. 12-17 wt % n-propanol)

In one embodiment the plastic bed support comprises a sintered porous plastic. The plastic bed support comprises_a polyolefin such as polyethylene.

In one embodiment the plastic bed support has a diameter of at least 10 cm, such as at least 30 cm.

Other features and advantages of the invention will be apparent from the following examples and from the claims.

### Examples

### Example 1 Wetting of separate polyethylene frits

100 mm diameter sintered polyethylene (PE) frit disks (Porvair PLC Vyon® F HDPE, thickness 3.2 mm, pore size 20 microns, pore volume 36 %) were cut into approx. 8 pieces. Each piece was weighed dry and the dry weight was noted. A drop of each solution was first added to a piece to see the degree of absorption by the sinter. The PE frit pieces were then immersed in the different solutions and weighed at 2, 6, and 24 hours after immersion. The pieces were then placed on a shaker (Edmund Buehler SM) for 30 minutes and finally rinsed with running purified water.

Petri dishes of glass (19.5 cm diameter) were filled with the respective solutions and a piece of frit material was placed into each solution. The frits were more or less floating on the surface of the liquid i.e. they were not totally immersed in the liquid. Intermittently, a plastic pipette was used to press the frits down and slightly knocking on them in the aim to get rid of air. After 1 hour they were turned over and after additional 1 hour the pieces were weighed (a total of 2 hours) and the weights were noted. The pieces were put back into the Petri dishes and turned over after 2 hours. After additional 2 hours the pieces were weighed (a total of 6 hours) and the weights noted. The pieces were again placed in the Petri dishes and allowed to stay overnight. After approximately 24 hours the pieces were weighed and the weights noted. The pieces placed in their solutions were then put on a shaker for 30 min, weighed and the weights noted. Finally, the pieces were rinsed with running water for about 1 minute and 30 seconds. Before the frit pieces were weighed, the edges were quickly wiped with a soft tissue by pressing the edges against a tissue placed on a lab bench.

A piece of PE frit was wetted in an ultrasound bath (Elma S 450H) with 1 M (4 wt %) NaOH for 15 minutes on each side. The piece was then rinsed with running water and quickly wiped with a soft tissue to get rid of drops.

### Example 1 a

As can be seen from Table 2, 26 wt % 1-propanol and 26 wt % 2-propanol (IPA) gave the best wetting expressed as solution uptake. This was also observed when a drop of solution was added to the different pieces of PE frits. The drops of 1-propanol and 2-propanol solution were absorbed by the PE frits while drops from the other solutions remained on the frit surface. The weight had increased about 50 % after 2 hours for the pieces of PE frits put into these solutions. A piece of PE frit wetted in an ultrasound bath with 1 M (4 wt. %) NaOH was also used. As can be seen from Table 2 this method gave only about 5 % increase in weight after 2 hours but additional wetting with an increase in weight to 33 % could be seen after rinsing them with running purified water. 8 M Urea gave the smallest increase in weight with about 4 % after 2 hours. The other solutions gave increase in weights between 4 - 30%.

The time did not seem to have any effect on the wetting because the weight did not increase much after 2 hours maybe a slightly increase in weight was observed after 6 hours for 17 wt % ethanol but no additional uptake of solution was observed after additional 18 hours e.g. after a total of 24 hours. However, increase in weights were noticed for some solutions after rinsing them with water, see Table 2.

**Table 2. Screening test showing the frit weight increase (%) after 2-24 hours immersion in the different solutions**

| **Test solution** | **2 h wt increase, %** | **6 h wt increase, %** | **24 h wt increase, %** | **Wt increase after water rinse, %** |
|---|---|---|---|---|
| 26 wt % 1-propanol | 51 | 51 | 50 | 49 |
| 26 wt 2-propanol (IPA) | 50 | 51 | 51 | 49 |
| 1+1 (26 wt % 2-propanol (IPA) + 1 M NaOH) | 45 | 45 | 46 | 46 |
| 4 wt % Benzyl alcohol | 36 | 38 | 38 | 40 |
| 17 wt % Ethanol | 9 | 12 | 12 | 18 |
| 300 ppm sodium hypochlorite in 1 M NaOH | 5 | 6 | 5 | 14 |
| 1 M NaOH | 5 | 6 | 6 | 23 |
| 1 M NaOH in an ultrasound bath after rinsing with water | 5 | - | - | 33 |
| 8 M Urea | 3 | 4 | 4 | 5 |

To correct for the different densities of the solutions a calculation of the absorbed volume per gram frit material was done. The calculations are documented in Table 3. From the pore volume (36 %) and the HDPE material density (0.95 g/ml) of the frit material used, the volume uptake corresponding to complete displacement of all air can be calculated to be 0.59 ml/g.

**Table 3. Absorbed volume per gram PE frit material.**

| **Solution** | **Volume uptake, ml (after 2 hours) for 1 gram of PE frit material ml/g** |
|---|---|
| 26 wt % 1-propanol | 0.53 |
| 26 wt % 2-propanol | 0.52 |
| 1+1 (26 wt % 2-propanol (IPA) + 1 M NaOH) | 0.45 |
| 4 wt % benzyl alcohol | 0.36 |
| 17 wt % ethanol | 0.09 |
| 300 ppm sodium hypochlorite in 1 M NaOH | 0.05 |
| 1 M NaOH | 0.05 |
| 1 M NaOH in an ultrasound bath | 0.05 |
| 8 M Urea | 0.03 |

### Example 1 b

Table 4 shows results for the different concentrations performed with 1-propanol and 2-propanol.

1-propanol seems to have better effect of wetting the pieces of PE frit. 17 wt % 1-propanol gave 53 % increase in weight while 2-propanol only gave 29 % after 2 hours. For 2-propanol 21 wt % was required to achieve the same effect. For the lower concentrations 8 and 12 % an increase in weight could be seen after 24 hours and after rinsing with water. The same effect applies to 17 wt % 2-propanol.

**Table 4. Results shown with increase in weight for different concentrations of 2-propanol and 1-propanol**

| **Cone. wt %** | **1-propanol 2h wt increase, %** | **24 h wt increase , %** | **Wt increase after water rinse, %** | **2-propanol 2 h wt increase, %** | **24 h wt increase , %** | **Wt increase after water rinse, %** |
|---|---|---|---|---|---|---|
| 8 | 6 | 18 | 29 | 6 | 10 | 21 |
| 12 | 34 | 40 | 44 | 15 | 23 | 33 |
| 17 | 53 | 51 | 50 | 29 | 37 | 43 |
| 21 | - | - | - | 50 | 52 | 51 |
| 26 | 51 | 50 | 49 | 51 | 50 | 49 |

### Example 2 Wetting of polyethylene bed support mounted in a column

A dry disk of Porvair PLC Vyon® F sintered PE - thickness 3.2 mm, pore size 20 microns - was immersed in 1 M NaOH, treated in an ultrasonic bath for 2*15 min and then washed with 17 wt % aqueous ethanol before mounting in a 300 mm column.

Another dry disk of Porvair PLC Vyon® F sintered PE - thickness 3.2 mm, pore size 20 microns was directly mounted in the 300 mm column, which was filled with 17 wt % aqueous 1-propanol, pressurized to 100 kPa overpressure and incubated for 2 hours.

In both cases the columns were packed to 10 cm bed height with SP Sepharose® HP cation exchange media (GE Healthcare Life Sciences) and then unpacked and repacked twice with the same media. After each packing, the plate number (N/m - plates per m) and the asymmetry factor were measured by standard methods known in the art. The results summarized in Table 5 show that acceptable plate numbers were achieved and that the experiment using wetting with 17 wt % 1-propanol in situ in the columns gave a better consistency between the packings, indicating a more complete wetting from the start. Comparative experiments where the bed support was only contacted with water gave unsatisfactory column performance.

**Table 5. Plate number and asymmetry factor for packed columns**

| **Wetting method** | **Packing no.** | **Plate number N/m** | **Asymmetry As** |
|---|---|---|---|
| Loose support in 1M NaOH + ultrasound | 1 | 13842 | 1.03 |
| | 2 | 18072 | 1.16 |
| | 3 | 18725 | 1.15 |
| | % increase from packing 1 to packing 3 | 35 | 12 |
| Support in column with 17% 1-propanol | 1 | 18295 | 1.11 |
| | 2 | 18901 | 1.15 |
| | 3 | 19345 | 1.17 |
| | % increase from packing 1 to packing 3 | 6 | 5 |

## Claims

1. A method for wetting a plastic bed support for a chromatography column, said method comprising the steps of
a. providing a plastic bed support, comprising a polyolefin, with a pore structure comprising air in said pore structure and
b. soaking the plastic bed support in an aqueous solution comprising 12-21 wt % n-propanol, resulting in the removal of at least about 60% of the air from said pore structure.

2. The method according to claim 1, further comprising a step c. of applying at least 10 kPa overpressure to said plastic bed support when soaked in said aqueous solution and/or vibrating said plastic bed support when soaked in said aqueous solution.

3. The method according to any preceding claim, further comprising a step d. of washing said plastic bed support to remove said n-propanol.

4. The method according to claim 2, wherein step c. comprises applying ultrasound to the plastic bed support.

5. The method according to any preceding claim, wherein in step b. said aqueous solution has either no flash point or a flash point of at least 30°C, such as higher than 35°C.

6. The method according to any preceding claim, wherein said aqueous solution comprises 12-17 wt % n-propanol.

7. The method according to any preceding claim, wherein said plastic bed support has a diameter of at least 5 cm, such as at least 30 cm.

8. The method according to any preceding claim, wherein said plastic bed support comprises a sintered porous plastic.

9. The method according to any preceding claim, wherein said plastic support comprises polyethylene.

10. A method for separation of a biomolecule on a column (7) comprising at least one plastic bed support (4), said method comprising the steps of
a. providing a column (7) comprising a plastic bed support (4), comprising a polyolefin, with a pore structure comprising air in said pore structure,
b. soaking said plastic bed support in an aqueous solution comprising 12-21 wt % n-propanol,
c. applying at least 10 kPa overpressure to said column when the plastic bed support is soaked in said aqueous solution and/or vibrating said column when the plastic bed support is soaked in said aqueous solution, resulting in the removal of at least about 60% of the air from said pore structure,
d. washing said plastic bed support,
e. packing a bed (8) of chromatography media in said column and
f. applying a liquid comprising a biomolecule on said column.

11. The method according to claim 10, wherein in step b said aqueous solution comprises 12-17 wt % n-propanol.

12. The method according to any one of claims 10-11, wherein said plastic support comprises polyethylene.

## Patentansprüche

1. Verfahren zur Benetzung eines Kunststoffbettträgers für eine Chromatographiesäule, wobei das Verfahren die folgenden Schritte umfasst:
a. Bereitstellen eines Kunststoffbettträgers, umfassend ein Polyolefin mit einer Porenstruktur, umfassend Luft in der Porenstruktur, und
b. Einweichen des Kunststoffbettträgers in einer wässrigen Lösung, umfassend 12-21 Gew.-% n-Propanol, was zur Entfernung von mindestens etwa 60 % der Luft aus der Porenstruktur führt.

2. Verfahren nach Anspruch 1, weiter umfassend einen Schritt c. des Anlegens von mindestens 10 kPa Überdruck an den Kunststoffbettträger, wenn dieser in der wässrigen Lösung eingeweicht wird und/oder Schwingen des Kunststoffbettträgers, wenn dieser in der wässrigen Lösung eingeweicht wird.

3. Verfahren nach einem der vorstehenden Ansprüche, weiter umfassend einen Schritt d. des Waschens des Kunststoffbettträgers zum Entfernen des n-Propanols.

4. Verfahren nach Anspruch 2, wobei Schritt c. das Anlegen von Ultraschall an den Kunststoffbettträger umfasst.

5. Verfahren nach einem der vorstehenden Ansprüche, wobei in Schritt b. die wässrige Lösung entweder keinen Flammpunkt oder einen Flammpunkt von mindestens 30°C, wie z. B. höher als 35°C aufweist.

6. Verfahren nach einem der vorstehenden Ansprüche, wobei die wässrige Lösung 12-17 Gew.-% n-Propanol umfasst.

7. Verfahren nach einem der vorstehenden Ansprüche, wobei der Kunststoffbettträger einen Durchmesser von mindestens 5 cm, wie z. B. mindestens 30 cm, aufweist.

8. Verfahren nach einem der vorstehenden Ansprüche, wobei der Kunststoffbettträger einen gesinterten porösen Kunststoff umfasst.

9. Verfahren nach einem der vorstehenden Ansprüche, wobei der Kunststoffträger Polyethylen umfasst.

10. Verfahren zur Trennung eines Biomoleküls auf einer Säule (7), umfassend mindestens einen Kunststoffbettträger (4), wobei das Verfahren die folgenden Schritte umfasst:
a. Bereitstellen einer Säule (7), umfassend einen Kunststoffbettträger (4), umfassend ein Polyolefin mit einer Porenstruktur, umfassend Luft in der Porenstruktur,
b. Einweichen des Kunststoffbettträgers in einer wässrigen Lösung, die 12-21 Gew.-% n-Propanol umfasst,
c. Anlegen von mindestens 10 kPa Überdruck an die Säule, wenn der Kunststoffbettträger in der wässrigen Lösung eingeweicht ist und/oder Schwingen der Säule, wenn der Kunststoffbettträger in der wässrigen Lösung eingeweicht ist, was zur Entfernung von mindestens etwa 60 % der Luft aus dieser Porenstruktur führt,
d. Waschen des Kunststoffbettträgers,
e. Packen eines Bettes (8) aus Chromatographiemedien in die Säule und
f. Anlegen einer Flüssigkeit, die ein Biomolekül umfasst, an die Säule.

11. Verfahren nach Anspruch 10, wobei in Schritt b. die wässrige Lösung 12-17 Gew.-% n-Propanol umfasst.

12. Verfahren nach einem der Ansprüche 10 und 11, wobei der Kunststoffträger Polyethylen umfasst.

## Revendications

1. Procédé de mouillage d'un support de lit en matière plastique pour une colonne chromatographique, ledit procédé comprenant les étapes consistant à
a. fournir un support de lit en matière plastique, comprenant une polyoléfine, avec une structure poreuse comprenant de l'air dans ladite structure poreuse et
b. imbiber le support de lit de matière plastique dans une solution aqueuse comprenant 12 à 21% en poids de n-propanol, entraînant l'élimination d'au moins environ 60 % de l'air de ladite structure poreuse.

2. Procédé selon la revendication 1, comprenant en outre une étape c. consistant à appliquer une surpression d'au moins 10 kPa audit support de lit en matière plastique lorsqu'il est imbibé dans ladite solution aqueuse et/ou soumettre à des vibrations ledit support de lit en matière plastique lorsqu'il est imbibé dans ladite solution aqueuse.

3. Procédé selon l'une quelconque des revendications précédentes, comprenant en outre une étape d. consistant à laver ledit support de lit en matière plastique afin d'éliminer ledit n-propanol.

4. Procédé selon la revendication 2, dans lequel l'étape c. comprend l'application d'ultrasons au support de lit en matière plastique.

5. Procédé selon l'une quelconque des revendications précédentes, dans lequel à l'étape b., ladite solution aqueuse n'a pas de point éclair ou a un point éclair d'au moins 30 °C, notamment supérieur à 35 °C.

6. Procédé selon l'une quelconque des revendications précédentes, dans lequel ladite solution aqueuse comprend 12 à 17 % en poids de n-propanol.

7. Procédé selon l'une quelconque des revendications précédentes, dans lequel ledit support de lit en matière plastique a un diamètre d'au moins 5 cm, notamment d'au moins 30 cm.

8. Procédé selon l'une quelconque des revendications précédentes, dans lequel ledit support de lit en matière plastique comprend une matière plastique poreuse frittée.

9. Procédé selon l'une quelconque des revendications précédentes, dans lequel ledit support en matière plastique comprend du polyéthylène.

10. Procédé de séparation d'une biomolécule sur une colonne (7) comprenant au moins un support de lit en matière plastique (4), ledit procédé comprenant les étapes consistant à
a. fournir une colonne (7) comprenant un support de lit en matière plastique (4), comprenant une polyoléfine, avec une structure poreuse comprenant de l'air dans ladite structure poreuse,
b. immerger ledit support de lit en matière plastique dans une solution aqueuse comprenant 12 à 21 % en poids de n-propanol,
c. appliquer une surpression d'au moins 10 kPa à ladite colonne lorsque le support de lit en matière plastique est imbibé dans ladite solution aqueuse et/ou soumettre à des vibrations ladite colonne lorsque le support de lit en matière plastique est imbibé dans ladite solution aqueuse, entraînant l'élimination d'au moins environ 60% de l'air de ladite structure poreuse,
d. laver ledit support de lit en matière plastique,
e. compacter un lit (8) de corps chromatographiques dans ladite colonne et
f. appliquer un liquide comprenant une biomolécule sur ladite colonne.

11. Procédé selon la revendication 10, dans lequel, à l'étape b, ladite solution aqueuse comprend 12 à 17 % en poids de n-propanol.

12. Procédé selon l'une quelconque des revendications 10 et 11, dans lequel ledit support en matière plastique comprend du polyéthylène.
